# EUROPEAN PATENT APPLICATION

(11) **EP 1 188 530 A2**
(43) Date of publication of application: **20.03.2002**
(21) Application number: 01307833.2
(22) Date of filing: 14.09.2001
(51) Int. Cl.: B29B 13/02, B29C 45/17

(54) **Method for improving elastic modulus of biodegradable resin composition**

(30) Priority: 14.09.2000 JP 2000279169
(71) Applicant: SONY CORPORATION, Tokyo (JP)
(72) Inventor: Fujihara, Yuko, c/o Sony Corporation, Tokyo (JP); Noguchi, Tsutomu, c/o Sony Corporation, Tokyo (JP); Mori, Hiroyuki, c/o Sony Corporation, Tokyo (JP)
(74) Representative: Sexton, Jane Helen

(57) **Abstract**

A method for improving elastic modulus of a biodegradable resin composition, wherein the biodegradable resin composition is placed for a predetermined period in an environment satisfying the conditions such that:
(1) keeping the temperature 5°C or more higher than the glass gransition point of said biodegradable resin composition; and
(2) keeping the environment humidified.

## Description

Although Designated Household Appliance Recycling Law will be enforced in April 2001, it has not been a general practice to collect and recycle waste household appliances, except for large-sized ones such as television sets, and there has not been a legal regulation thereof. Thus most of waste household appliances have been disposed as non-combustible waste. Even those small in size result in a large volume of waste if they are marketed in a huge number. This raises a serious problem in relation to the recent shortage of waste disposal field. One popular method of waste disposal is shredding. Such shredding is, however, only effective in reducing volume of the waste, and the shredded waste will remain intact for decades and centuries if committed to landfill, which never provides an essential solution. The shredding is also disadvantageous for material recycling since the whole parts are finely crushed, so that even a valuable material such as steel is mixed with other invaluable materials to thereby lower the purity and ruin the recycling efficiency.

It will thus be beneficial to design the structure for easy decomposition so as to allow separate processing of portions to be recycled and portions to directly be disposed by a relatively simple disintegration procedure, which may be attained for example by composing an enclosure or structural portion, which accounts for a most volume of household appliances, with a biodegradable material, and attaching thereto non-biodegradable members such as electronic devices or circuit boards through screw tightening or engagement.

For example, outermost portion of the enclosure of radio, microphone, pendant-type television set, keyboard, radio cassette tape recorder, portable cassette tape recorder, mobile phone and earphone may be composed of a biodegradable material. Composing such portions often brought into contact with human body with a biodegradable material is also beneficial in terms of raising safety of such household appliances as compared with those made of synthetic resins.

It is, however, incorrect that any biodegradable material will be acceptable, and certain level of physical properties is required if the material is intended for use in enclosures or structural members. In the first place, the material should remain unchanged even after storage at 60°C and humidity of 80% for 100 hours.

Biodegradable plastics ever developed are roughly classified into three groups of those having as a molecular skeleton an aliphatic polyester resin, polyvinyl alcohol and polysaccharide. Such biodegradable plastics, however, suffer from relatively low melting point in general and insufficient physical properties (heat resistance, in particular) suitable for practical molded products, so that they have not been applied to enclosures of household appliances or the like. Even a molded product made of poly-lactic acid, most excellent in heat resistance, will cause deformation in an aging test at 60°C and humidity of 80% for 100 hours, which again makes the material difficult to be applied to enclosures of household appliances or the like. A known technique for improving the heat resistance (elastic modulus) relates to addition of an inorganic filler or acceleration of crystallization through adding a nucleation agent. The filler, however, has to be added in an amount as much as several tens percent to satisfy a necessary level of the heat resistance for household appliances, which will ruin the fluidity and impact resistance of the plastic. As for the nucleation agent, phosphate-base and sorbitol-base compounds are known to be effective for polypropylene, which may however exhibit only an insufficient effect on biodegradable aliphatic polyester resin. Ecological impact of such nucleation agent is also concerned.

From such situation, biodegradable resins have only a limited range of applications at present, which include agricultural and fishery materials (film, gardening pot, fishing line, fishing net, etc.), civil engineering materials (water retention sheet, planting net, sandbag, etc.), and packages or containers (those difficult to be recycled due to adhesion of mud or food, etc.).

It is therefore an object of the present invention to provide a method for improving elastic modulus of biodegradable resin composition which allows simple and rapid procedure for improving elastic modulus of biodegradable resin composition while retaining an ample strength, waterproof property and moldability, and also ensuring a rapid degradability upon disposal by common soil microorganisms.

The present inventors found out after extensive investigations aimed at obtaining a biodegradable resin compound applicable to enclosures of household appliances that only allowing the biodegradable resin compound to stand under specific conditions may accomplish the foregoing object, which led us to complete the present invention.

That is, one aspect of the present invention is to provide a method for improving elastic modulus of a biodegradable resin composition, wherein the biodegradable resin composition is placed for a predetermined period in an environment satisfying the conditions such that:
(1) keeping the temperature 5°C or more higher than the glass transition point of such biodegradable resin composition; and
(2) keeping the environment humidified.

Another aspect of the present invention is to provide a method for improving elastic modulus of a biodegradable resin composition, in which the biodegradable resin composition is placed for a predetermined period in an environment satisfying the conditions such that:
(1) keeping the temperature 15°C or more higher than the glass transition point of said biodegradable resin composition and 120°C or below; more preferably 15°C or more higher than the glass transition point thereof and 80°C or below;
(2) keeping a relative humidity at 60% or above and more preferably keeping a relative humidity from 60% to 80%.

The present invention is to specifically provide a method for improving elastic modulus, in which such biodegradable resin composition is made into an injection-molded product.

Another aspect of the present invention is to provide a method for improving elastic modulus of a biodegradable resin composition, in which the biodegradable resin composition is injected within an environment in a die satisfying the conditions such that:
(1) keeping the temperature 15°C or more higher than the glass transition point of said biodegradable resin composition and 120°C or below; and more preferably 15°C or more higher than the glass transition point thereof and 80°C or below, and;
(2) keeping a relative humidity at 60% or above and more preferably keeping a relative humidity from 60% to 80%; and is then placed within such die for a predetermined period.

Still another aspect of the present invention is to provide a method for improving elastic modulus of a biodegradable resin composition, in which such biodegradable resin composition is injected into a die to thereby obtain an injection-molded product, and such injection-molded product is placed for a predetermined period within such die under supply of steam at a temperature near 100°C or air satisfying the following conditions such that:
(1) keeping the temperature 15°C or more higher than the glass transition point of said biodegradable resin composition and 120°C or below and more preferably 15°C or more higher than the glass transition point thereof and 80°C or below, and;
(2) keeping a relative humidity at 60% or above and more preferably keeping a relative humidity from 60% to 80%.

According to the present invention, only a simple process such that aging the biodegradable resin composition under specific conditions may successfully improve within a short time the elastic modulus (at 80°C) from 10⁷ Pa to 10⁹ Pa. Such improvement in the elastic modulus results in provision of a material for enclosures of household appliances, which may retain the shape thereof unchanged even after an aging test at 80°C and 80% RH for 100 hours.

Using the molded product obtained by the present invention typically for enclosures of household appliances successfully widens a range of choice of the disposal methods. More specifically, such molded products may directly be disposed or may be subjected to the material recycling similarly to the general resins. In particular for the case of small-sized products, the material recycle generally does not pay since the amount of material recoverable therefrom is small despite labor-consuming disintegration, and since the material is cheap by nature. The biodegradable resin having such choice for direct disposal is also advantageous in this context. The biodegradable resin will never remain as waste for a long period and thus never ruin land view even if directly disposed. The biodegradable resin does not contain hazardous components such as heavy metals and organochlorine compounds, so that there is no fear of emitting hazardous substances when combusted. The biodegradable resin is also advantageous in that saving exhaustible resources such as petroleum if it is synthesized from cereal resources.

The invention is illustrated by the following drawings:
Fig. 1 is a graph showing relations between elastic modulus and temperature for poly-lactic acids before and after the aging of the present invention;
Fig. 2 is a graph showing relations between elastic modulus and temperature for poly-lactic acids before and after the aging of the present invention in Example 2;
Fig. 3 is a graph showing changes in elastic moduli of sample strips of poly-lactic acid aged under various conditions;
Fig. 4 is a schematic drawing explaining a method for measuring deflection of the sample strip; and
Fig. 5 is a graph showing a relation between the amount of deflection and elastic modulus (at 80°C).

The present invention will be detailed hereinafter.

The present invention is characterized in that keeping the biodegradable resin composition under specific conditions (referred to as "aging" hereinafter), to thereby improve the elastic modulus of the composition. Such specific conditions refer to specific atmospheric temperature and humidified state. More specifically, the aging preferably satisfies the conditions such that:
(1) keeping the temperature 5°C or more higher than the glass transition point of the biodegradable resin composition, and preferably 15°C or more higher than the glass transition point thereof and 120°C or below, and more preferably 15°C or more higher than the glass transition point thereof and 80°C or below.
(2) keeping the environment humidified, preferably keeping a relative humidity at 60% or above, and more preferably keeping a relative humidity from 60% to 80%.

The aging period is preferably selected so as to raise the elastic modulus of the biodegradable resin composition as high as 10⁸ Pa (at 80°C) or above, and is specifically selected within a range from 5 minutes to 3.5 hours and more preferably selected within a range from 15 minutes to 3.5 hours. depending on species of such biodegradable resin composition,

According to the present invention, the biodegradable resin composition is preferably made into an injection-molded product. The aging of the biodegradable resin composition may also be proceeded in an injection molding die. The aging in such case may be conducted by injecting the air satisfying the foregoing conditions (1) and (2).

For such an injection-molded product, the aging period is preferably selected so as to raise the elastic modulus of the biodegradable resin composition as high as 10⁸ Pa (at 80°C) or above, and is specifically selected within a range from 1 minute to 5 minutes and more preferably for about 2 minutes, depending on species of such biodegradable resin composition.

Biodegradable resin is defined as a plastic which may be decomposed into smaller molecules by action of naturally-occurring microorganisms, and ultimately into water and carbon dioxide (Biodegradable Plastics Society, ISO/TC-207/SC3).

The biodegradable resin available for the present invention may be exemplified as those of polyester base, and more preferably as aliphatic polyester-base resins in which the moldability, heat resistance and impact resistance are well balanced.

The aliphatic polyester resins include those containing poly-lactic acid, which may be typified as polymers or copolymers of oxiacids such as lactic acid, malic acid or glycolic acid, and may particularly be typified as aliphatic polyester resins containing hydroxycarboxilic acid such as poly-lactic acid.

Such aliphatic polyester resins containing poly-lactic acid may be obtained generally by so-called lactide method which is a method based on ring-opening polymerization of lactides or corresponding lactones. Other possible method relates to direct dehydro-condensation of lactic acid.

Catalysts available for producing the aliphatic polyester resins containing poly-lactic acid include tin, antimony, zinc, titanium, iron and aluminum compounds; particularly preferable examples thereof include tin-base catalysts and aluminum-base catalysts; and most preferable examples thereof include tin octylate and aluminum acetylactonate.

Among the aliphatic polyester resins containing poly-lactic acid, poly-L-lactic acid obtained by lactide ring-opening polymerization is particularly preferable since it may be hydrolyzed into L-lactic acid and the safety thereof has already been proven. Poly-lactic acids other than poly-L-lactic acid are of course also allowable.

In the present invention, it is allowable to use an additive reactive with a carboxyl group or hydroxyl group, which is a terminal functional group of the biodegradable polyester resin, in order to control the hydrolytic susceptibility of such resin, where examples of such additive include carbodiimide compounds, isocyanate compounds and oxazoline compounds. In particular, the carbodiimide compound are preferable since they may be mixed under fusion with the polyester resins, and are capable of controlling the hydrolytic susceptibility only in a small amount of addition. The carbodiimide compounds are now referred to those having at least one carbodiimide group within one molecule (including polycarbodiimide compounds), and may be synthesized typically by decarboxylative condensation of various polyisocyanates at approx. 70°C or above using no solvent or in an inactive solvent under the presence of a catalyst such as a organophosphorus compound or organometallic compound. Examples of monocarbodiimide, as one category of such carbodiimide compounds, include dicyclohexylcarbodiimide, diisopropylcarbodiimide, dimethylcarbodiimide, diisobutylcarbodiimide, dioctylcarbodiimide, *t*-butylisopropylcarbodiimide, diphenylcarbodiimide, di-*t*-butylcarbodiimide and di-naphthylcarbodiimide. Among these, dicyclohexylcarbodiimide and diisopropylcarbodiimide are particularly preferable in terms of their industrial availability.

In the present invention, such carbodiimide compound may be mixed with the biodegradable resin by kneading under fusion using an extrusion apparatus.

The rate of biodegradation of such biodegradable resin is controllable depending on the type and the amount of addition of the carbodiimide compound to be blended, so that the type and the amount of addition of the carbodiimide compound may properly be selected depending on target products. The amount of addition of the carbodiimide compound is typically within a range from 0.1 to 2 wt% of the poly-lactic acid.

The biodegradable resin composition of the present invention is properly be added as required with reinforcement members, inorganic fillers, organic fillers, antioxidants, thermal stabilizes, ultraviolet absorbers, or other decomposable organic compounds such as lubrimayts, waxes, coloring materials, crystallization accelerators or starch.

### Examples

The present invention will be described referring to Examples and Comparative Examples.

Measurement methods for elastic modulus and glass transition point (Tg) are shown below.
Sample strip: 50 mm long x 7 mm wide x 2 mm thick
Measurement instrument: Visco-elasticity analyzer (product of Rheometric Corporation)
Frequency: 6.28 rad/s
Temperature at start of measurement: 0°C
Temperature at end of measurement: 160°C
Heating rate: 5°C /min
Distortion: 0.05%

### Example 1

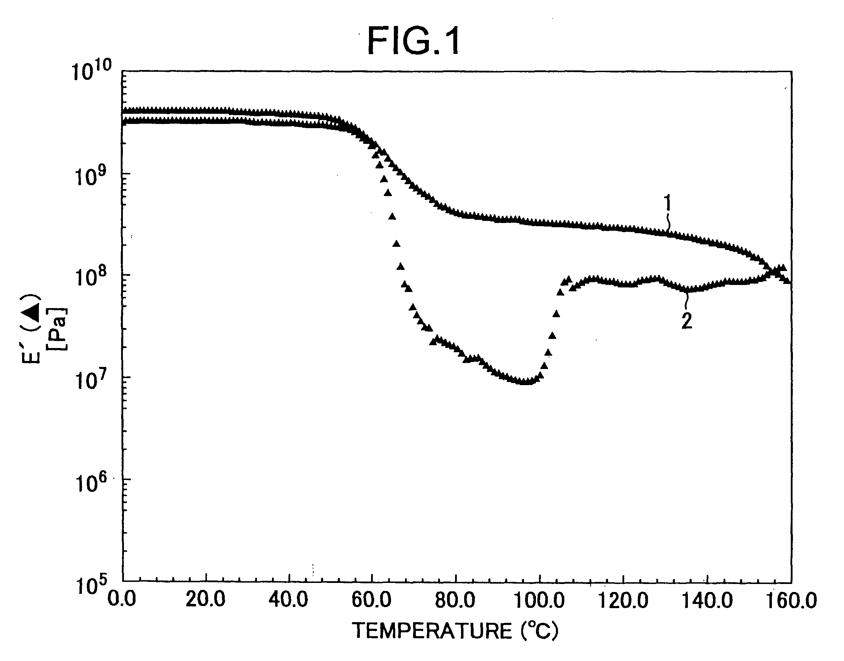

Fig. 1 is a graph showing relations between elastic modulus and temperature for poly-lactic acids before and after the aging of the present invention.

A poly-lactic acid employed in this Example is Lacea H100J (trade name), a product of Mitsui Chemicals. A sample strip not subjected to the aging (curve 2) showed a sharp decrease in the storage modulus E at around the glass transition point (60°C) or higher, which reached minimum at around 100°C, again sharply rose thereafter and reached almost plateau from around 120°C to 160°C . Such sample strip deformed when it was subjected to the aging test at 60°C for 100 hours.

On the contrary, a poly-lactic acid sample strip subjected to the aging at 80°C, 80% RH (relative humidity) for 15 minutes (curve 1) showed a remarkable improvement in the storage modulus E'. The storage modulus E' decreased at around the glass transition point but only in a lesser degree than in curve 2, and remained in almost plateau thereafter up to 160°C or around.

Such sample strip subjected to the aging did not deform in the aging test at 60°C, 80% RH for 100 hours.

### Example 2

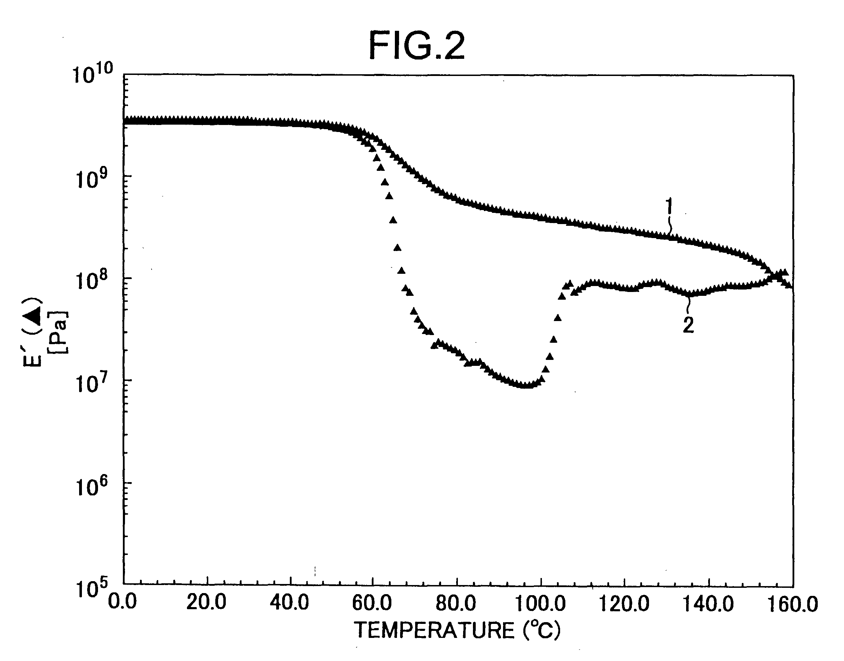

A biodegradable resin composition was prepared by blending under fusion poly-lactic acid, 10 wt% of mica as an inorganic filler and 2 wt% of dicyclohexylcarbodiimide (Carbodilite HMV-10B, trade name by Nissinbo Industries, Inc.) as an additive for suppressing the hydrolysis. The aging of a sample strip at 80°C, 80% RH for 3.5 hours showed a remarkable improvement in the elastic modulus. Fig. 2 is a graph showing relations between elastic modulus and temperature for poly-lactic acids before and after the aging of the present invention in Example 2. A sample strip not subjected to the aging (curve 2) showed a sharp decrease in the storage modulus E' at around the glass transition point (60°C) or higher, which reached minimum at around 100°C, again sharply rose thereafter and reached almost plateau from around 120°C to 160°C. On the contrary, a poly-lactic acid sample strip subjected to the aging (curve 1) showed a remarkable improvement in the storage modulus E'. The storage modulus E' decreased at around the glass transition point but only in a lesser degree than in curve 2, and remained thereafter in almost plateau up to 160°C or around. It was made clear from Fig. 2 that a behavior similar to that in Example 1 was also observed in Example 2.

Such sample strip subjected to the aging did not deform in the aging test at 80°C, 80% RH for 100 hours.

### Example 3

The aging conditions for the poly-lactic acid sample strip were altered to 80°C and 60% RH. After two hours from the start of the aging, the elastic modulus reached a level equivalent to that obtained for 80% RH (5 × 10⁸ Pa). The sample strip subjected to the aging did not deform in the aging test at 80°C, 80% RH for 100 hours.

### Example 4

Poly-lactic acid sample strips were subjected to aging at 60°C, 80% RH or at 65°C, 80% RH. The sample strip subjected to the aging at 60°C, 80% RH showed no improvement in the elastic modulus even after 3 hours, whereas the sample strip subjected to the aging at 65°C, 80% RH showed approximately two-fold improvement in the elastic modulus after 3 hours. The glass transition point (Tg) of the poly-lactic acid is 60°C, so that it is necessary to select the aging temperature at a temperature higher by 5°C than such glass transition point, and more preferably higher by 15°C. A temperature of 120°C or higher is, however, undesirable since the resin may be hydrolyzed. Accordingly, a desirable temperature resides in a range from 80°C to 90°C.

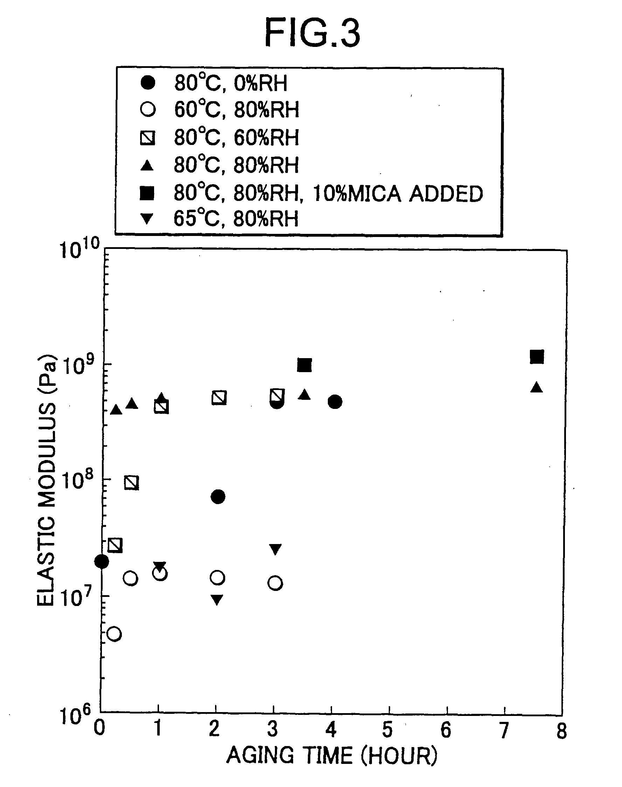

Fig. 3 is a graph showing changes in elastic moduli of sample strips of poly-lactic acid aged under various conditions. It was found from Fig. 3 that no improvement in the elastic modulus was observed even after 3 hours of the aging at 60°C, 80% RH, a remarkable improvement in the elastic modulus was observed after 3 hours of the aging at 65°C, 80% RH. The aging at 80°C, 80% RH showed a remarkable improvement in the elastic modulus within a short time. While improvement in the elastic modulus was also observed for the aging at 0% RH, it was not advantageous since almost 3 hours were necessary to attain an elastic modulus of 10⁸ Pa or above. Humidifying the atmosphere at 80% RH successfully improved the elastic modulus from 10⁷ Pa to 10⁹ Pa by the aging only for 15 minutes, which was almost equivalent to 12-fold improvement.

### Example 5

A biodegradable resin composition was prepared by blending under fusion poly-lactic acid, 10 wt% of mica as an inorganic filler and 2 wt% of dicyclohexylcarbodiimide (Carbodilite HMV-10B, trade name by Nissinbo Industries, Inc.) as an additive for suppressing the hydrolysis. The composition was then subjected to injection molding using a die whose atmosphere is conditioned at 80°C, 80% RH.

The injection molding apparatus employed herein is Model FE-120, product of Nissei Plastic Industrial Co., Ltd., having a screw diameter of 40 m/m. Injection conditions include an injection pressure of 2,240 kg/cm² and a mold clamping force of 120 kg/cm²; and molding conditions include a nozzle temperature of 175°C, a front zone temperature or 180°C, a middle zone temperature of 170°C, an end zone temperature of 160°C, and a die temperature both on the fixed and mobile sides of 80°C.

After the injection, a molded product (sample strip) was aged within the die for 15 minutes, and was then taken out. The elastic modulus was found to be improved as high as 5 x 10⁸ Pa. On the contrary, a case with no aging, that is, a sample strip obtained by injecting the composition into the die conditioned at 50°C, and was taken out after 2 minutes, showed no improvement where an elastic modulus was as low as 4 × 10⁷ Pa.

### Example 6

A biodegradable resin composition was prepared by blending under fusion poly-lactic acid, 10 wt% of mica as an inorganic filler and 2 wt% of dicyclohexylcarbodiimide (Carbodilite HMV-10B, trade name by Nissinbo Industries, Inc.) as an additive for suppressing the hydrolysis. The composition was then subjected to injection molding essentially similarly to Example 5, except that steam at 80°C and 80% RH was injecting into the die for 2 minutes, and the molded product was then taken out. The elastic modulus was found to be improved as high as 5 × 10⁸ Pa.

### Example 7

Poly-lactic acid was kneaded under fusion with Carbodilite HMV-10B (Nissinbo Industries, Inc.) as an additive for suppressing the hydrolysis in an amount of 0.5, 1.0 or 2.0 wt% to thereby prepare sample strips. The sample strips were subjected to the aging test at 80°C, 80% RH for 100 hours, and the hydrolytic susceptibilities (changes in the molecular weight) were compared. It was confirmed that the test strip composed only of poly-lactic acid decomposed to a degree of 95%, and that the addition of the Carbodilite HMV-10B reduced the hydrolytic susceptibilities (changes in the molecular weight) at any amount of addition. It was found that the amount of addition is preferably adjusted within a range from 1.0 to 2.0 wt% in order to suppress the hydrolytic susceptibility (changes in the molecular weight) within 10%.

### Comparative Example

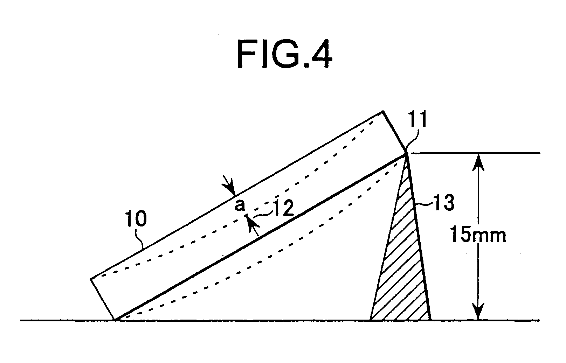

A poly-lactic acid sample strip not aged in Example 1 was subjected to the aging test at 60°C and 80% RH for 100 hours and showed a deflection of 1.5 mm. Such deflection was obtained by a measurement as illustrated in Fig. 4, in which a sample strip 10 was supported at one end 11 in the longitudinal direction thereof by a support member 13 to a height of 15 mm (solid line), and the depth of deflection at a maximum downward deflected portion 12 (virtual line) was measured in millimeter after the aging test.

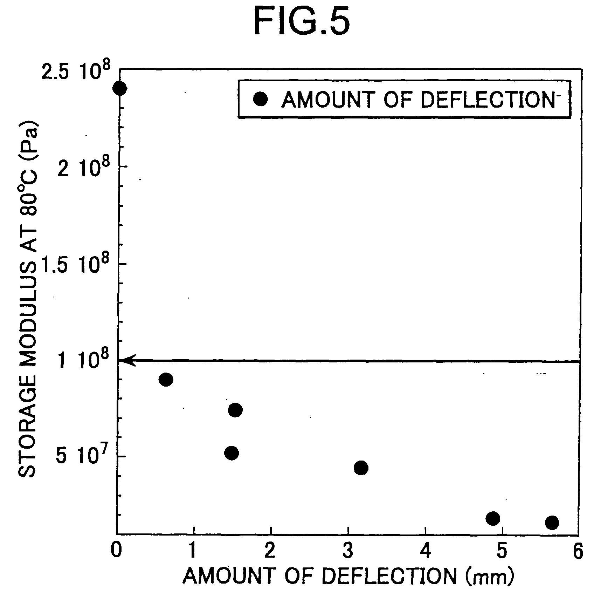

Fig. 5 is a graph showing a relation between the amount of deflection and elastic modulus (at 80°C). It was known from Fig. 5 that raising the elastic modulus at 80°C to 1 × 10⁸ Pa or above may almost completely avoid the deflection.

Although the invention has been described in its preferred form with a certain degree of particularity, obviously many changes and variations are possible therein. It is therefore to be understood that any modifications will be practiced otherwise than as specifically described herein without departing from the scope of the present invention.

## Claims

1. A method for improving elastic modulus of a biodegradable resin composition, wherein the biodegradable resin composition is placed for a predetermined period in an environment satisfying the conditions such that:
(1) keeping the temperature 5°C or more higher than the glass transition point of said biodegradable resin composition; and
(2) keeping the environment humidified.

2. The method according to Claim 1, wherein the biodegradable resin composition is placed for a predetermined period in an environment satisfying the conditions such that:
(1) keeping the temperature 15°C or more higher than the glass transition point of said biodegradable resin composition and 120°C or below; and
(2) keeping a relative humidity at 60% or above.

3. The method according to Claim 1 or Claim 2, wherein said biodegradable resin composition is made into an injection-molded product.

4. A method for improving elastic modulus of a biodegradable resin composition, wherein the biodegradable resin composition is injected within an environment in a die satisfying the conditions such that:
(1) keeping the temperature 15°C or more higher than the glass transition point of said biodegradable resin composition and 120°C or below; and
(2) keeping a relative humidity at 60% or above; and is then placed within such die for a predetermined period.

5. A method for improving elastic modulus of a biodegradable resin composition, wherein said biodegradable resin composition is injected into a die to thereby obtain an injection-molded product, and said injection-molded product is placed for a predetermined period within such die under supply of steam at a temperature within a prescribed range at least including 100°C or air satisfying the following conditions such that:
(1) keeping the temperature 15°C or more higher than the glass transition point of said biodegradable resin composition and 120°C or below; and
(2) keeping a relative humidity at 60% or above.

6. The method according to any one of Claims 1, 4 and 5, wherein said predetermined period is sufficient for raising the elastic modulus of said biodegradable resin composition as high as 10⁸ Pa (at 80°C ) or above.

7. The method according to Claim 6, wherein said predetermined period is 5 minutes to 3.5 hours.

8. The method according to any one of the preceding claims, wherein said biodegradable resin composition contains a polyester-bsase resin.

9. The method according to Claim 8, wherein said biodegradable resin composition contains poly-lactic acid.

10. The method according to Claim 8, wherein said biodegradable resin composition contains a biodegradable polyester and an additive for suppressing the hydrolysis thereof.

11. The method according to Claim 10, wherein said biodegradable resin composition contains poly-lactic acid and carbodiimide.

12. The method according to Claim 11, wherein said carbodiimide is added in a range from 0.1 to 2 wt% of said poly-lactic acid.
